Europäisches Patentamt

European Patent Office

Office européen des brevets

(19)

(11) Veröffentlichungsnummer: **0 024 483**
**A1**

(12) # EUROPÄISCHE PATENTANMELDUNG

(21) Anmeldenummer: **80103146.9**

(22) Anmeldetag: **06.06.80**

(51) Int. Cl.³: **G 02 F 1/133**
**H 05 B 3/18**

(30) Priorität: **25.08.79 DE 2934503**

(43) Veröffentlichungstag der Anmeldung:
**11.03.81 Patentblatt 81/10**

(84) Benannte Vertragsstaaten:
**FR GB IT SE**

(71) Anmelder: **VDO Adolf Schindling AG**
**Gräfstrasse 103**
**D-6000 Frankfurt/Main(DE)**

(72) Erfinder: **Preiss, Bernd**
**Fichtenstrasse 33**
**D-6238 Hofheim(DE)**

(74) Vertreter: **Könekamp, Herbert, Dipl.-Ing.**
**Sodener Strasse 9**
**D-6231 Schwalbach(DE)**

(54) **Elektrische Heizeinrichtung für eine Flüssigkristallzelle.**

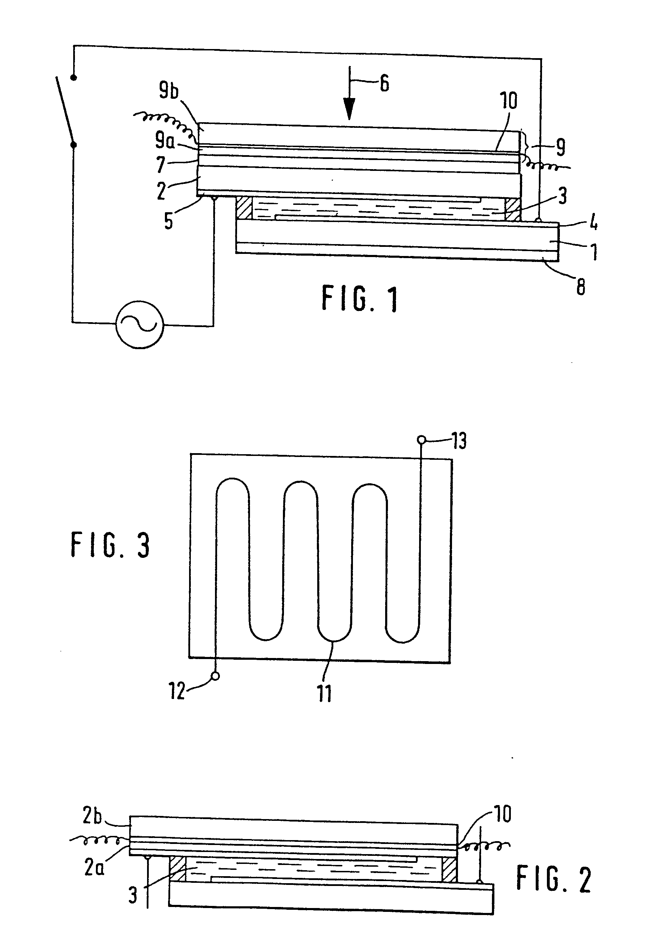

(57) Bei einer Flüssigkristallzelle ist eines der der Flüssigkristallsubstanz 3 benachbarten Gläser (2,9) in zwei Teile (2a, 2b; 9a, 9b) unterteilt und zwischen beiden Teilen sind im wesentlichen durchsichtige Widerstands-Heizmittel (10, 11) angeordnet. Durch diese Anordnung der Heizmittel (10, 11) wird erreicht, daß die Zelle mit einer geringen Heizleistung rasch aufgeheizt werden kann. (Fig. 1)

FIG. 1

0024483

VDO                        6 FRANKFURT/MAIN 90
ADOLF SCHINDLING AG         GRÄFSTRASSE 103

<u>Elektrische Heizeinrichtung für eine Flüssigkristallzelle</u>

Die Erfindung betrifft eine elektrische Heizeinrichtung für eine Flüssigkristallzelle, insbesondere zur Darstellung alphanumerischer Zeichen und Symbole in Kraftfahrzeugen.

Bei der Entwicklung elektronischer Anzeigesysteme kommt der Technologie der Flüssigkristalle eine wichtige Rolle zu. Flüssigkristallzellen haben eine Reihe günstiger Eigenschaften, so der Ablesbarkeit, der geringen Stromaufnahme, der Schwingungsfestigkeit und der Lebensdauer, die sie insbesondere zur Anzeige kraftfahrzeugspezifischer Werte in Kraftfahrzeugen geeignet erscheinen lassen. Einer der wenigen in der Eigenart der Flüssigkristalle begründeten Nachteile der Flüssigkristallzellen besteht in ihrem Temperaturverhalten, d. h. unterhalb bestimmter Temperaturen kann der Flüssigkristall durch Anlegen eines elektrischen Feldes nicht mehr gesteuert werden.

Um die nachteiligen Wirkungen dieser Temperaturabhängigkeit zu beseitigen, ist es bereits bekannt, einer Flüssigkristallzelle eine Heizung zuzuordnen, die die Temperatur des Flüssigkristalls nicht zu stark abfallen lässt.

Eine bekannte Flüssigkristallzelle, der eine Heizung zugeordnet werden kann, weist generell den Aufbau auf, dass die Flüssigkristallsubstanz zwischen zwei Zellengläsern eingeschlossen ist, die innen durch durchscheinende Elektroden beschichtet sind. Die Elektroden stehen mit einer Spannungsquelle zur Steuerung der Eigenschaften des Flüssigkristalls in Verbindung. Die zwischen den Zellengläsern eingeschlossene Flüssigkristallsubstanz ist zwischen zwei Polarisatoren angeordnet. Demzufolge ist ein Polarisator dem Betrachter zugewandt, während der andere Polarisator, auch Analysator genannt, auf der dem Betrachter abgewandten Seite der Flüssigkristallzelle angeordnet ist. In Blickrichtung hinter dem zweiten Polarisator befindet sich schliesslich ein Reflektor, der das Licht durch die Polarisatoren und die Flüssigkristallzelle reflektiert. Die bekannte Heizeinrichtung für eine solche Flüssigkristallzelle kann ausserhalb der die Kristallflüssigkeit aufnehmenden Zellengläser oder aber in dem zwischen den Zellengläsern zur Aufnahme des Flüssigkristalls gebildeten Raum angeordnet sein. Die innen liegende Heizung ist jedoch hinsichtlich der elektrischen Isolation gegenüber den Elektroden problematisch. Die ausserhalb der Zellengläser liegende Heizung zeigt hingegen insofern Nachteile, als eine grössere Heizleistung benötigt wird und/oder ein längerer Zeitraum abgewartet werden muss, bis durch diese Heizung die Flüssigkristallsubstanz erwärmt ist.

Der vorliegenden Erfindung liegt die Aufgabe zu Grunde, unter Vermeidung der Nachteile der bekannten Flüssigkristallheizeinrichtung eine elektrische Heizeinrichtung so auszugestalten, dass sie bei einer vergleichsweise geringen Heizleistung ohne Isolationsprobleme ein rasches Aufheizen des Flüssigkristalls ermöglicht.

Diese Aufgabe wird erfindungsgemäss für eine elektrische Heizeinrichtung der eingangs genannten Gattung dadurch gelöst, dass eines der dem Flüssigkristall benachbarten Gläser in zwei Glasschichten unterteilt ist und dass zwischen beiden Glasschichten im wesentlichen durchsichtige Widerstands-Heizmittel angeordnet sind.

Durch die Einbettung der Widerstandsheizmittel zwischen zwei Glasschichten, die somit einen Glasverbund bilden, ist das Isolationsproblem gelöst. Ferner ist die Wärmeübertragung zu dem Flüssigkristall günstig, da die Wärme nicht durch die gesamte Stärke des Glases transportiert werden muss, sondern nur durch diejenige Schicht, die dem Flüssigkristall benachbart ist. Nach aussen hin zu der dem Flüssigkristall abgewandten Seite ist hingegen der Wärmeabfluss durch die zweite Glasschicht isoliert. Deswegen genügt eine vergleichsweise geringe Wärmeleistung.

In vorteilhafter Weise zeichnet sich die elektrische Heizeinrichtung dadurch aus, dass die dem Flüssigkristall benachbarte Glasschicht dünner bemessen ist als die dem Flüssigkristall abgewandte Glasschicht.

Dadurch ist die Wärmeleitung zu dem Flüssigkristall besonders günstig.

In einer ersten besonders vorteilhaften Ausführungsform der elektrischen Heizeinrichtung sind die Widerstands-Heizmittel in dem an den Flüssigkristall unmittelbar angrenzenden Zellglas untergebracht. Dadurch werden die Wärmeleitungsverhältnisse besonders vorteilhaft, da die Wärmeleistung nur die eine - dünne - Glasschicht durchlaufen muss, um in die Flüssigkristallsubstanz zu gelangen.

In einer anderen Ausführungsform ist es möglich, dass die Widerstands-Heizmittel in dem die Flüssigkristallzelle abdeckenden Deckglas untergebracht sind.

Dieses Deckglas, das zum Schutz der Flüssigkeitszelle dienen kann, befindet sich zwar in einem grösseren Abstand zu der Flüssigkristallsubstanz als die Zellengläser. Diese Variante hat jedoch den Vorteil, dass die eigentliche Flüssigkristallzelle nicht zu der erfindungsgemässen Heizung verändert werden muss. Die Vorteile der Einbettung der Widerstands-Heizmittel zwischen zwei Glasschichten bleiben jedenfalls teilweise erhalten.

In einer Variante der elektrischen Heizeinrichtung sind die Widerstands-Heizmittel als Heizdraht ausgebildet, der wellenförmig zwischen den Glasscheiben angeordnet ist. Der Heizdraht kann dabei so dünn ausgebildet sein, dass er die Durchsicht durch das den Heizdraht aufnehmende Glas nicht nennenswert behindert.

In einer anderen besonders vorteilhaften Variante der elektrischen Heizeinrichtung sind die Widerstands-Heizmittel als dünne Schicht zwischen den Glasscheiben angeordnet. Als dünne Schicht wird dabei eine Schichtdicke im Mikrometer-Bereich verstanden, welche die Durchsicht noch nicht nennenswert behindern kann. Diese Schicht ergibt eine gleichmässige Erwärmung ohne störende partielle Abdeckung von Anzeigeelementen. Sie kann, beispielsweise durch Aufdampfen, fertigungsgünstig aufgetragen werden.

Nach einem anderen Aspekt der Erfindung wird ein mit der Heizung der Flüssigkristallzelle zusammenhängendes Problem gelöst, das darin besteht, die Flüssigkristallzelle so aufzuheizen, dass ihre Temperatur zwar über einer vorgegebenen Mindesttemperatur liegt, dass aber die Aufheizung nicht zu stark ist. Es könnte daran gedacht werden, dieses Problem durch einen Regelkreis mit Temperaturfühler und Stellglied zu lösen. Diese Lösung ist jedoch verhältnismässig aufwendig.

- 5 -

Nach der erfindungsgemässen Lösung ist jedoch eine besonders einfache Regelung dadurch vorgesehen, dass das Material der Widerstands-Heizmittel einen negativen Temperaturkoeffizienten des Widerstands aufweist und dass die Widerstandsmittel durch eine Konstant-Spannungsquelle gespeist sind.

Dadurch kann ohne weiteres eine Temperaturregelung erzielt werden, da der Stromfluss dann gross ist, wenn die Temperatur der Flüssigkristallzelle niedrig ist und umgekehrt im Verlaufe des Aufheizens absinkt, bis die Heizung praktisch ganz abgeschaltet ist.

Eine besonders vorteilhafte Realisierung der elektrischen Heizeinrichtung für Flüssigkristallzellen, die sich selbst regelt, besteht darin, dass ein dem Flüssigkristall benachbartes Glas in einer zu seiner Oberfläche parallelen Ebene mit einer Schicht aus Indiumzinnoxid bedampft ist.

Diese wirkungsvolle und herstellungsgünstige Bedampfung mit Indiumzinnoxid wird bevorzugt auf einer Oberfläche vorgesehen, die zwischen zwei Glasschichten eines Verbunds liegt. Mit schlechterer Wirkung, aber herstellungsgünstiger ist es jedoch möglich, die Indiumzinnoxidschicht auch aussen auf ein Zellenglas oder auf ein Deckglas aufzubringen.

Die Erfindung wird im folgenden anhand einer Zeichnung mit drei Figuren erläutert, und zwar zeigen:

Fig. 1   eine Flüssigkristallzelle mit Abdeckscheibe
(ohne Reflektor) im Querschnitt,

Fig. 2   einen Querschnitt durch das Zellenglas der
Flüssigkristallzelle mit der erfindungsgemässen
Heizeinrichtung und

Fig. 3  eine Draufsicht auf ein zur Beheizung der
Flüssigkristallzelle vorgesehenes Glas.

In Fig. 1 sind mit 1 und 2 Zellengläser bezeichnet, zwischen denen eine Flüssigkristallsubstanz 3 eingeschlossen ist. Die Zellengläser sind innen mit durchsichtigen Elektroden 4, 5 versehen, die zur Steuerung der Eigenschaften des Flüssigkristalls durch Anlegen einer elektrischen Spannung dienen. In Blickrichtung 6 vor den Zellengläsern befindet sich ein erster Polarisator 7 und hinter den Zellengläsern ein zweiter Polarisagor 8, dem ein Reflektor folgen kann. Diese gesamte Anordnung ist nach vorne durch ein Deckglas 9 abgedeckt.

Das Deckglas 9 ist in zwei Glasschichten 9a und 9b aufgeteilt, und zwar ist die Glasschicht 9a relativ dünn und die Glasschicht 9b relativ dick. Zwischen beiden Glasschichten befindet sich als Widerstands-Heizmittel ein Heizdraht, der gemäss Fig. 3 wellenförmig über die Fläche des Deckglases gelegt sein kann oder aber eine durchgehende dünne Schicht mit einer Schichtdicke im Mikrometerbereich darstellt. Beim Anlegen einer Spannung an den Heizdraht oder an die Heizschicht wird Wärme erzeugt, die zum grossen Teil in die Flüssigkristallsubstanz transportiert wird und zum geringeren Teil durch die relativ dicke Glasschicht 9b nach aussen.

Die beiden Glasschichten 9a und 9b des Deckglases stellen ein Verbundsystem dar, das ähnlich dem bekannten Mehrschichtenglas sicherheitsfördernd wirkt, vor allem dann, wenn die Abmessungen der Flüssigkristallzelle verhältnismässig gross sind.

Aus Fig. 2 ist ersichtlich, wie ein Zellenglas in eine dünne, der Flüssigkristallsubstanz benachbarte Glasschicht 2a und eine relativ dicke, der Flüssigkristallsubstanz abgewandte Glasschicht 2b unterteilt sein kann, wobei zwischen beiden Glasschichten eine Indiumzinnoxidschicht 10 als Heizschicht angeordnet ist. Diese Anordnung der Heizschicht arbeitet mit noch besserem Wirkungsgrad als die Heizeinrichtung nach Fig. 1.

Aus Fig. 3 ist schliesslich ersichtlich, wie eine anstelle der Heizschicht vorgesehene Anordnung eines Heizdrahtes 11 mit Anschlüssen 12, 13 verläuft, die anstelle der Heizschicht 10 vorgesehen sein kann.

Patentansprüche:

1. Elektrische Heizeinrichtung für eine Flüssigkristallzelle, insbesondere zur Darstellung alphanumerischer Zeichen und Symbole in Kraftfahrzeugen, dadurch gekennzeichnet, dass eines der dem Flüssigkristall (Flüssigkristallsubstanz 3) benachbarten Gläser (z.B. 2, 9) in zwei Glasschichten (2a, 2b; 9a, 9b) unterteilt ist und dass zwischen beiden Glasschichten im wesentlichen durchsichtige Widerstands-Heizmittel (10, 11) angeordnet sind.

2. Elektrische Heizeinrichtung nach Anspruch 1, dadurch gekennzeichnet, dass die dem Flüssigkristall (Flüssigkristallsubstanz 3) benachbarte Glasschicht (9a, 2a, 9a) dünner bemessen ist als dem Flüssigkristall abgewandte Glasschicht.

3. Elektrische Heizeinrichtung nach Anspruch 1 oder 2, dadurch gekennzeichnet, dass die Widerstands-Heizmittel in dem an den Flüssigkristall unmittelbar angrenzenden Zellglas (2) untergebracht sind.

4. Elektrische Heizeinrichtung nach Anspruch 1 oder 2, dadurch gekennzeichnet, dass die Widerstands-Heizmittel in dem die Flüssigkristallzelle abdeckenden Deckglas (9) untergebracht sind

5. Elektrische Heizeinrichtung nach einem der Ansprüche 1 bis 4, dadurch gekennzeichnet, dass die Widerstands-Heizmittel als Heizdraht (11) ausgebildet sind, der wellenförmig zwischen den Glasschichten (2a, 2b; 9a, 9b) angeordnet ist.

6. Elektrische Heizeinrichtung nach einem der Ansprüche 1 bis 4,
   <u>dadurch gekennzeichnet</u>, dass die Widerstands-Heizmittel als dünne Schicht zwischen den Glasscheiben angeordnet sind.

7. Elektrische Heizeinrichtung nach einem der Ansprüche 1 bis 6,
   <u>dadurch gekennzeichnet</u>, dass das Material der Widerstands-Heizmittel einen negativen Temperaturkoeffizienten des Widerstands aufweist und dass die Widerstandsmittel durch eine Konstant-Spannungsquelle gespeist sind.

8. Elektrische Heizeinrichtung für Flüssigkristallzellen insbesondere nach einem der vorangehenden Ansprüche,
   <u>dadurch gekennzeichnet</u>, dass ein dem Flüssigkristall benachbartes Glas in einer zu seiner Oberfläche parallelen Ebene mit einer Schicht aus Indiumzinnoxid bedampft ist.

FIG. 1

FIG. 3

FIG. 2

**0024483**

Nummer der Anmeldung

**EUROPÄISCHER RECHERCHENBERICHT**

Europäisches Patentamt

EP 80103146.3

| | EINSCHLÄGIGE DOKUMENTE | | KLASSIFIKATION DER ANMELDUNG (Int Cl⁴) |
|---|---|---|---|
| Kategorie | Kennzeichnung des Dokuments mit Angabe, soweit erforderlich, der maßgeblichen Teile | betrifft Anspruch | |
| X | US - A - 3 637 291 (THE NAT. CASH REGISTER COMPANY) <br> + Fig. 1,2; Spalte 2, Zeile 43 - Spalte 3, Zeile 20 + <br> -- | 1-3,6 | G O2 F 1/133 <br> H O5 B 3/18 |
| A | DE - A1 - 2 704 776 (ISHII) <br> + Fig. 2; Seite 17, Zeile 12 - Seite 20, Zeile 3 + <br> -- | 3-5 | |
| | US - A - 3 524 726 (GENERAL TIME CORPORATION) <br> + Fig. 1,2; Spalte 4, Zeilen 48-61 + <br> -- | 5 | **RECHERCHIERTE SACHGEBIETE (Int. Cl.³)** |
| A | US - A - 4 029 393 (GENERAL MOTORS) <br> + Fig. 1; Spalte 2, Zeilen 39-43, 55-60 + <br> -- | 7 | G O2 F 1/OO <br> G O9 F 9/OO <br> G O4 C 17/OO <br> H O1 C 7/OO |
| | DE - A - 2 332 164 (WESTERN) <br> + Fig. 2; Seite 15, Zeile 23 - Seite 16, Zeilen 6,18-21; Seite 17, Zeile 15 - Seite 18, Zeile 4 + <br> ---- | 8 | |

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| X | Der vorliegende Recherchenbericht wurde für alle Patentansprüche erstellt | |
|---|---|---|
| **Recherchenort** WIEN | **Abschlußdatum der Recherche** 11-11-1980 | **Prüfer** BENISCHKA |

EPA form 1503.1  06.78